# EUROPEAN PATENT APPLICATION

(11) **EP 1 118 902 A1**
(43) Date of publication of application: **25.07.2001**
(21) Application number: 00949917.9
(22) Date of filing: 26.07.2000
(51) Int. Cl.: G02F 1/1335, G02F 1/139

(54) **LIQUID CRYSTAL DISPLAY DEVICE**

(30) Priority: 29.07.1999 JP 21469499; 21.10.1999 JP 29968299
(71) Applicant: Matsushita Electric Industrial Co., Ltd., Kadoma-shi, Osaka-fu, 571-8501 (JP)
(72) Inventor: NAKAO, Kenji, Osaka-shi, Osaka 535-0031 (JP); UEMURA, Tsuyoshi, Kadoma-shi, Osaka 571-0063 (JP); ISHIHARA, Shoichi, Katano-shi, Osaka 576-0034 (JP); HATTORI, Katsuji, Takarazuka-shi, Hyogo 665-0002 (JP); TANAKA, Yoshinori, Hirakata-shi, Osaka 573-1112 (JP)
(74) Representative: Dempster, Benjamin John Naftel
(86) International application number: JP0005000
(87) International publication number: WO0109673

(57) **Abstract**

In a liquid crystal display element particularly that having a mode wherein the display operation is performed by controlling the amount of birefringence of the liquid crystal layer, such as an OCB type liquid crystal display element, the contrast is improved. This is achieved by the following: the reflection of light that occurs inside the element is reduced, the reflected light resulting from the difference in the refractive indices between materials for the boundary surfaces of the portions inside the element is reduced, and the internal light, such as light from the backlight, is directed toward the direction orthogonal to the surfaces of the substrates. More specifically, a light absorbing material may be used in portions of a black matrix, active elements, and wirings formed on at least one of the substrates.

## Description

### TECHNICAL FIELD

The present invention relates to liquid crystal display elements, in particular to such liquid crystal display elements as can be used in liquid crystal television receivers, portable office automation equipment, and the like.

### BACKGROUND ART

### GENERAL BACKGROUND ART

The most commonly used liquid crystal display elements are those with a TN type (Twisted Nematic type) liquid crystal. In recent years liquid crystal display elements with an OCB type (Optically Compensated Bend mode) liquid crystal, including so-called □-cells, have also been developed in various types. Such elements provide the advantages of fast response, wide viewing angles, and so forth.

Since they are publicly known and disclosed, for example, in Technical Report of IEICE, EDI98-144, p.199, as well as in Japanese Unexamined Patent Publications No. 7-84254 and No. 9-96790, to name a few, the details of the OCB type liquid crystal and of the display elements and elements using the OCB liquid crystal will not be given herein.

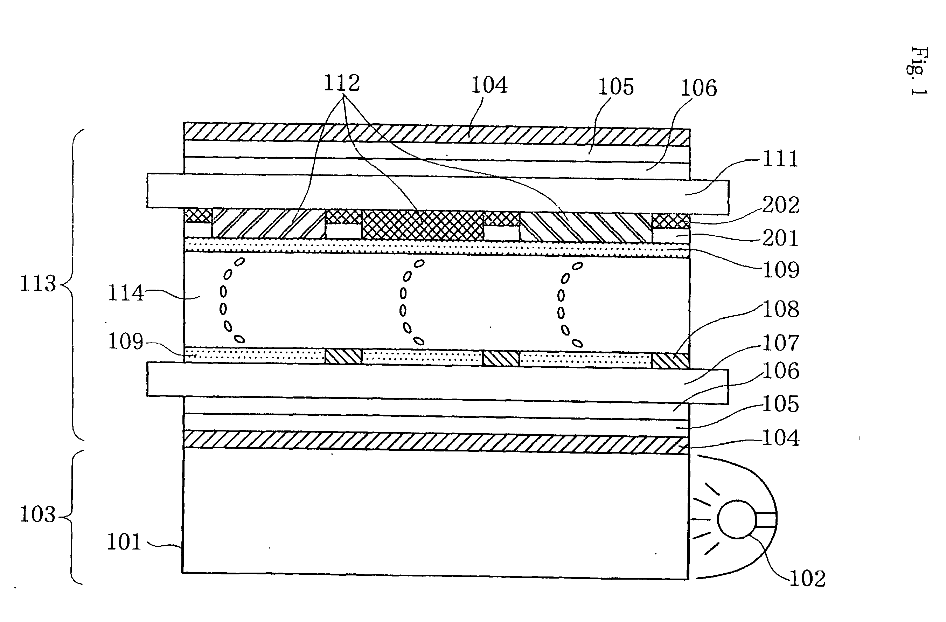

Now, Fig. 1 illustrates the structure of a typical OCB type liquid crystal display element. As is the case with many other elements using other liquid crystal types, a backlight unit 103, which is a white light source, is disposed on the backside of a liquid crystal panel 113. The backlight unit comprises a light guide plate 101, a sidelight 102, and so forth. A liquid crystal (material) 114 having a predetermined thickness is held (or sandwiched when there are two substrates) between two substrates, upper and lower substrates (111 and 107). Color filters 112 for red, green, and blue are formed on the substrate 111, corresponding to each pixel. The other substrate is an active matrix substrate on which active elements, such as TFTs 108, are formed. Further, so-called black matrices 201 and 202 are formed between the color filters. The black matrix 202 facing the substrate is made of chromium oxide, and the black matrix 201 facing the liquid crystal is made of chromium metal. Transparent electrodes 109 made of ITO are formed on the front and back surfaces of the liquid crystal panel, serving as a means of applying voltage.

The more detailed description of the above element will not be given herein since it is publicly known, and only the portions related to the present invention will be discussed below.

OCB type liquid crystal display elements perform the display operation by applying a voltage so as to change the amount of birefringence and retardation (optical phase difference) of the liquid crystal layer. Therefore, in TN type liquid crystal elements as mentioned above, the rubbing directions that determine the direction of alignment of the liquid crystal differ by 90° between the upper and lower substrates so as to achieve a twisted alignment state, while in OCB type liquid crystal display elements, the parallel rubbing whereby liquid crystals on both upper and lower substrates are aligned in the same direction is employed.

Further, optical compensation films 106 and 105 are disposed on the outer surfaces of the upper and lower substrates. For the optical compensation films, an optical compensation film 106 wherein a discotic liquid crystal is hybrid aligned, and an optical compensation film 105 that is biaxially stretched are used, for example. Further, polarizing plates 104 are disposed on the outermost surfaces of the substrates. The polarizing axes of the polarizing plates are usually rotated by 45° with respect to the rubbing direction that determines the liquid crystal alignment. For example, when the upper polarizing plate is rotated by +45° and the lower polarizing axis is rotated by -45°, the axes of the upper and lower polarizing plates form an angle of 90°.

The above-description concerns with the case of so-called light-transmissive type elements that are mainly used in liquid crystal television display elements, word processors, and the like. In light-reflective type elements used in many portable elements, a light reflector is provided instead of the backlight unit, and further, the elements have slight differences in the lower retardation film, and so forth. However, since such differences are also well known, they will not be discussed herein.

### BACKGROUND ART SEEN IN TERMS OF PROBLEMS THAT THE INVENTION IS TO SOLVE

In OCB type liquid crystal display elements having such a structure as described above, first, a sufficient contrast (brightness in a bright display state / brightness in a dark display state) that meets the recent demand for improved display characteristics is difficult to obtain.

Second, during a black display state, depending on viewing angles, the difference in the crossing angle in the polarizing plates occurs, causing a bluish color shift. This also cannot be neglected since there are increasing demands from users in recent years that require the elements not degrading display characteristics depending on viewing angles.

Third, a higher brightness at the display surface is also demanded.

Accordingly, there is a need for techniques for providing a liquid crystal display element capable of achieving a higher contrast ratio, eliminating color shifts depending on viewing angles, and further attaining various display characteristics.

### DISCLOSURE OF THE INVENTION

The present invention has been accomplished as a result of the research carried out for solving the above-mentioned and other problems in prior art. Specifically, the present inventors have found and eliminated the factors that may inhibit the inventors from solving the problems in not only an OCB type element but a liquid crystal display element (including a liquid crystal switch and a liquid crystal logic element) comprising a liquid crystal having a mode of display such that graphics and results of computation are displayed by controlling the amount of birefringence, which liquid crystal in principle is sandwiched between two substrates, and thus have solved the foregoing problems. More specifically, the present invention has the following aspects.

In accordance with one aspect of the invention, the reflected light that occurs in various parts of a liquid crystal display element is reduced. In a liquid crystal display element having a liquid crystal (layer) wherein the display operation is performed by controlling the amount of birefringence, the liquid crystal (layer) being in principle sandwiched between two substrates, or in a liquid crystal display element having a single substrate, in a special case, wherein a liquid crystal (layer) and an upper interfacial resin film are formed, a light-blocking layer, such as so-called black matrix and a light-blocking portion (non-light transmissive portion) for the perimeter of the display, is formed on at least one of the substrates. At least a portion of the light-blocking layer (preferable on the entire light-blocking layer, unless it is preferable that the light-blocking layer be formed on a portion thereof), at least the portion facing the liquid crystal layer, may be composed of a light absorbing material instead of such a material that simply provides a light blocking effect.

In a liquid crystal display element, the light from the backlight coming from the backside of the substrate, the back side defined with respect to the user's side, reflects off the surface of the light-blocking layer on the upper substrate, which surface is on the side of the light-blocking layer facing the liquid crystal, toward the lower substrate, then reflects off the lower substrate back toward the upper substrate, and goes out of the display. Consequently, the reflected light is perceived by the user even in a dark display state, causing contrast reduction. This adverse effect is prevented by the above-described construction.

In a liquid crystal display element, at least one of the substrates, particularly a lower substrate that is away from the user, is an active matrix substrate having active elements made of a highly reflective material or white-colored such as polycrystalline silicon and highly reflective Wirings made of metal formed thereon. Therefore, a light absorbing material layer, a belt of films composed of a light absorbing material, or the like may be formed on at least a portion of the wirings and the active elements (preferably on the entire region over the wirings and the active elements, unless it is preferable that the light absorbing material layer or the like be formed on a portion thereof) and the like facing the liquid crystal, the wirings and the active elements being provided on at least one active matrix substrate (or on both substrates in principle if both substrates are active matrix substrates).

Thereby, a reduction in the contrast caused by the light coming from the substrate that is away from the user, particularly by the reflected light that is perceived by the user eventually by reflecting off the substrate that is away from the user, can be prevented.

In another aspect of the invention, in a similar liquid crystal display element, the interfacial reflection that occurs at the boundary surfaces of the substrates, the transparent electrodes, the retardation films, and so forth (particularly in the regions thereof where light passes through) is reduced. By focusing on the prevention or reduction of the contrast reduction caused by the reflected light that is perceived by the user particularly in a dark display state, and of the occurrence of a color shift in a dark display state, those reflected lights are reduced. More specifically, a transparent electrode is formed on at least one of the substrates, and an anti-reflection treatment may be carried out by forming a film, having an intermediate refractive index between that of the substrate and that of the transparent electrode, on the surface of the transparent electrode, or by forming an anti-reflection film on the surface of the transparent electrode.

Further, at least one retardation film (in principle two retardation films) provided on at least one substrate (in principle on both substrates) may be designed to have the surface reflectance of 1% or less. Also, the characteristics of the retardation film may be adjusted in various manners.

In another aspect of the invention, in a similar liquid crystal display element wherein a light absorbing material and a color filter are formed on an active matrix substrate having active elements and wirings formed thereon. The color filter material layer (film) is formed such that it extends over the active elements and the wirings that are formed outside the pixels, so that the extended portions can absorb the complementary colors of the color filter. Thereby, reflected light may be reduced without forming a light absorbing material layer composed of a resin matrix additionally.

In addition, an anti-reflection film may be formed on an interface between the upper or lower substrate and the air.

In still another aspect of the invention, in a similar liquid crystal display element, a light focusing means for focusing the light coming from the backlight in a front direction or in the direction directly toward a user may be provided, and/or a focused-light reflecting means for reflecting such a focused light may be provided. Thereby, the light that is basically not supposed to be perceived by the user, such as light traveling toward a non-light transmissive portion including the back surface of the black matrix on the substrate, the active elements, and the wirings on the active matrix substrate facing the liquid crystal, is minimized. As a result, the efficiency of utilizing light is improved, while preventing the reduction in the contrast caused by such light that reflects off the back surface of the black matrix and so forth and is perceived by the user eventually.

In another aspect of the invention, the liquid crystal may be such a liquid crystal wherein the retardation value thereof is not zero during a black display state.

In yet another aspect of the invention, the liquid crystal may be an OCB mode liquid crystal.

### BRIEF DESCRIPTION OF THE DRAWINGS

Fig. 1 is a cross sectional view showing the structure of a conventional OCB type liquid crystal display element.

Fig. 2 is a cross sectional view showing the structure of a liquid crystal display element of Example 1 according to the present invention.

Fig. 3 is a schematic view for illustrating the causes of the contrast reduction in a conventional OCB type liquid crystal display element.

Fig. 4 is a cross sectional view showing the structure of a liquid crystal display element of Example 2 according to the present invention.

Fig. 5 is a cross sectional view showing the structure of a liquid crystal display element of Example 3 according to the present invention.

Figs. 6(1) and 6(2) are cross sectional views showing the structures of a liquid crystal display element of Example 4 according to the present invention.

Fig. 7 is a cross sectional view showing the structure of a liquid crystal display element of Example 5 according to the present invention.

Fig. 8 is a cross sectional view showing the structure of a liquid crystal display element of Examples 6 and 8 according to the present invention.

Fig. 9 illustrates an adhesive layer and anti-reflection film for bonding two retardation films and for preventing interfacial reflection occurring between two retardation films in Example 7 according to the present invention.

Fig. 10 is a cross sectional view showing the structure of a liquid crystal display element of Example 9 according to the present invention.

Figs. 11(1) to 11(4) are cross sectional views showing the manufacturing process and the finished product of a liquid crystal display element of Example 10 according to the present invention.

Fig. 12 is a diagram showing the structure of the system of a liquid crystal display element of Example 11 according to the present invention.

### DESCRIPTION OF THE REFERENCE NUMERALS

- 101: Light guide plate
- 102: Sidelight
- 103: Backlight
- 104: Polarizing plate
- 105: Biaxial optical compensation film
- 106: Hybrid discotic optical compensation film
- 107: Lower substrate
- 108: TFT/wiring
- 109: Transparent electrode
- 1091: Reflective electrode
- 110: Resin black matrix
- 111: Upper substrate
- 1111: Upper transparent resin film and substrate
- 112: Color filter
- 1121: Extended portion of color filter
- 113: Liquid crystal panel (light-transmissive type)
- 1131: Liquid crystal panel (light-reflective type)
- 114: Liquid crystal
- 1141: Liquid crystal and resin film materials
- 200: Resin black matrix
- 201: Chromium
- 202: Chromium oxide
- 210: Prism sheet
- 211: Focused-light reflecting means
- 220: Anti-reflecting layer
- 2201: Anti-reflection film
- 221: Anti-reflection film (between the air and the polarizing plate)
- 230: Adhesive layer (film)
- 301: Light absorption material layer or belt
- 42: Optical logic element

### BEST MODE FOR CARRYING OUT THE INVENTION

The present invention will now be described in detail based on examples.

### EXAMPLE 1

Example 1 of the present invention relates to the prevention of reflection off the outer surface of a black matrix.

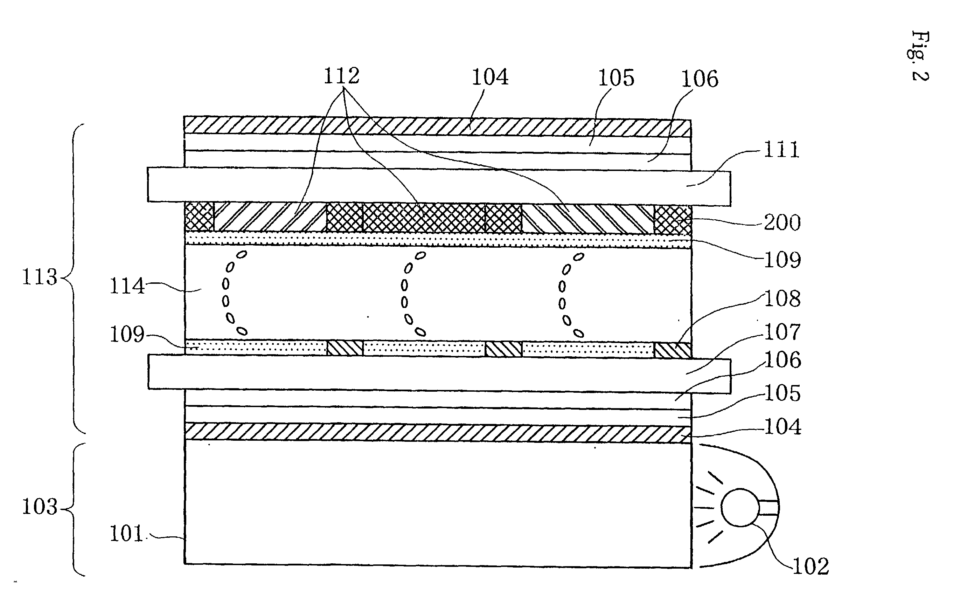

Fig. 2 is a cross sectional view of the liquid crystal display element of Example 1 in accordance with the present invention.

As shown in Fig. 2, the liquid crystal display element includes the liquid crystal panel wherein a liquid crystal is sandwiched between two substrates, and the retardation films are formed on the outer surfaces of the liquid crystal panel. Further, the color filters are formed on one substrate, and the TFT elements, and so forth are formed on the other substrate, and also the backlight unit is disposed on the backside of the liquid crystal panel. The basic structure of the liquid crystal display element is the same as that of a conventional liquid crystal display element shown in Fig. 1, except that a black matrix 200, serving as a light-blocking layer, formed on the color filter substrate that is the upper substrate in Fig. 1 (the user's side), is composed of a resin BM (a black matrix made of resin). The resin BM is made of an acrylic resin containing a black pigment.

In liquid crystal display elements, a black matrix having a lattice structure (in cases of so-called mosaic alignment) is provided between pixels so as to obtain a clearer color for each pixel and to block the light that reaches the TFT silicone film. The present inventors have found that the light from the backlight reflects off the back surface of the black matrix (light-blocking layer), causing a great contrast reduction.

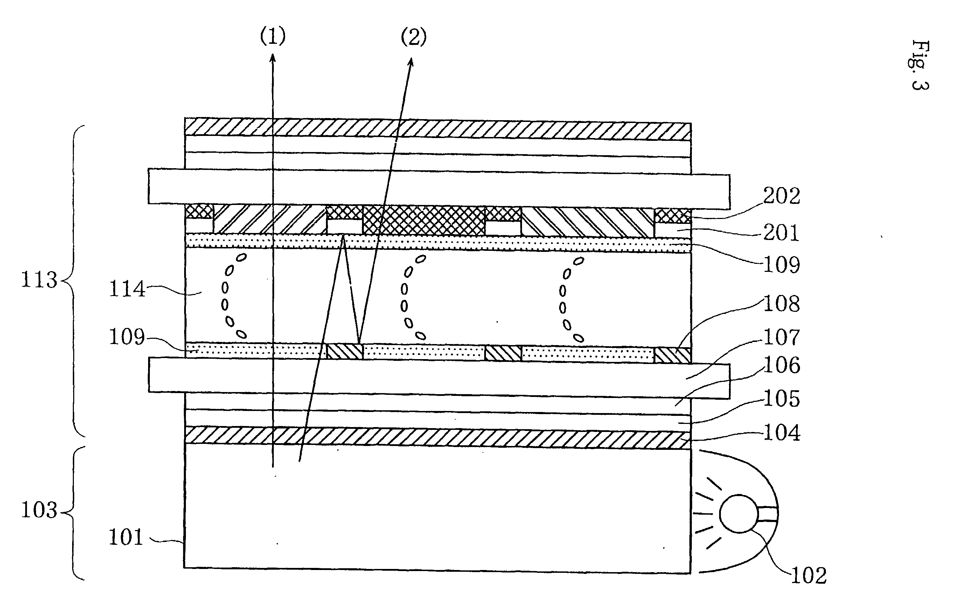

Now, referring to Fig. 3, further detailed explanation is given below. For the above reason, a black matrix 601 is generally composed of layers of chromium oxide and chromium. A black chromium oxide 202, which is desirable in improving vividness of colors, is deposited on the inner surface (the surface facing the liquid crystal) of the upper substrate, and a chromium 201 having a metallic luster with an excellent light blocking effect is layered below the chromium oxide 202. Due to this structure, the surface of the black matrix contacting the liquid crystal layer has a metallic luster, and thus, it is inevitable that the light traveling from the inside in an upward direction reflects off the metallic-lustered portion toward the inside.

In a conventionally designed liquid crystal display element, the light entering the liquid crystal panel from the backlight passes through a lower polarizing plate 104, lower retardation films 105 and 106, followed by a liquid crystal layer only once, and further through upper retardation films 106 and 105 and an upper polarizing plate 104 so that the light can go out of the element. This is schematically illustrated by the arrow (1) in Fig. 3. In a mode using birefringence, such as an OCB type liquid crystal display element, when the light passes through the element, the total amount of retardation of the light is controlled.

For obtaining a black display state in this Example, there is a condition that the retardation that occurs on the liquid crystal layer while the voltage for the black display state is being applied should be compensated with the retardation of the retardation films disposed on the outer surfaces of the upper and lower substrates. In this case, the upper and lower polarizing plates are under crossed Nicols, in which the plates are perpendicular to each other.

However, if the back surface of the black matrix 201 has a metallic luster, as shown in Figs. 1 and 3, light reflection occurs at the back surface. Moreover, light reflection occurs at the white-colored or metallic-lustered portions, such as the TFTs and the wirings, provided on the lower substrate shown in Figs. 1 and 3. A slight light reflection also occurs at the surface of an ITO transparent electrode.

Hence, light is reflected at the back surface of the black matrix on the upper substrate in a downward direction, and further at the TFTs, wirings, and so forth on the lower substrate back in an upward direction. As a result, a considerable amount of the reflected light goes out of the element directly in a front direction and is perceived by the observer or user. This is shown by the arrow (2) in Fig. 3. Since the light passes through a liquid crystal layer 114 three times, three times greater retardation occurs. Consequently, the retardation cannot be compensated fully with the upper and lower retardation films, and leaks upwardly.

In a liquid crystal display element, the project areas occupied by the black matrix, active elements, and wirings are quite large with respect to the display area, and the reflectances thereof are also large. These factors have been part of the causes of a reduction in the contrast of the display surface. More specifically, in Example 1, the upper and lower retardation films have a retardation value of 30 nm and the liquid crystal layer has a retardation value of 60 nm. Normally, the retardation between the films and the liquid crystal is compensated; however, when light passes through the liquid crystal layer three times, the retardation value of the liquid crystal layer becomes 180 nm (= 60 nm X 3). As a result, a retardation value of 120 nm remains even after the light has passed through the films. It turns out to serve as a λ/4 plate, and the transmissivity of the component reaches as high as a brightness of 50% with respect to white, which is the greatest.

The phenomenon or problem of a reduction in contrast caused by the reflected light occurs particularly in such a mode where a liquid crystal layer has birefringence in a black state, and the retardation value of the liquid crystal layer is not zero. When the retardation value is zero, such problem will not occur even if light passes through the liquid crystal layer multiple times. In OCB type liquid crystal display elements, the retardation of the films are controlled so as to compensate the retardation that occurs in the liquid crystal layer while the voltage for a black display state is being applied. In such elements, it is desirable to consider interfacial reflection. In such a construction, retardation films are attached to the front and back surfaces of the panel, and the retardation values of such retardation films in a front direction are not zero. In the case of vertically aligned type liquid crystal display elements, for example, a black display state is obtained in the vertical alignment state. In this case, little birefringence occurs in the liquid crystal layer, and also retardation films are not attached to the outer surfaces of the panel. Hence, in a vertically aligned type liquid crystal, the problem of the contrast reduction caused by the reflected light as described above virtually does not occur.

For conventional widely used TN (Twisted Nematic) type liquid crystal display elements, by utilizing optical activity, but not by controlling birefringence, an optical wavefront is transmitted along the twist direction of liquid crystal molecules. Therefore, in this case too, the problem of the contrast reduction caused by the reflected light as described above virtually does not occur.

As described above, in the liquid crystal display element of the present Example, the black matrix was formed by using the resin in which a black pigment is dispersed (the material for this black matrix is hereinafter referred to as "resin BM"), as shown in Fig. 2. Since the back surface of the resin BM as well as a front surface thereof is black, which differs from a conventional black matrix, little light reflection from the inside to the upward direction occurs. Therefore, reflected light almost never travels toward the user during a black display state in such a manner that the light from the backlight reflects off the back surface of the black matrix, and then, reflects off the front surface of the lower substrate again. Consequently, significant improvement in contrast is achieved.

Thereby, the liquid crystal display element of Example 1 achieved a contrast ratio of 200.

It is to be noted that the brightness of each individual color and other characteristics were not degraded during the color display operation. The present invention differs from the prior art in that a two-step process is not required for forming a black matrix. As a result, there is no increase in cost, and also a situation wherein the upper and lower layers are not precisely aligned does not occur. These points also made the present invention preferable.

As seen from the above description, in Example 1, there is a point in reducing the reflection that occurs at the back surface of the black matrix. Therefore, the black matrix is not limited to the resin BM. In other words, a general chromium oxide-chromium layered structure may be employed instead. Although it requires more processes, a triple-layer structure of chromium oxide/chromium/chromium oxide may be employed. Also, a single-layer structure of chromium oxide may be employed, in case of which, it needs to form a thicker layer.

With regard to the pigment used in the resin BM, it is not limited to a black material but mixed materials with various colors may also be used as long as they provide the light absorption effect.

As for the resin used for the resin BM, other materials that do not adversely affect the liquid crystal and that are easy to form may be used.

In this Example, the black matrix in the display area has been discussed thus far. It is noted, however, that reflected light that affects the contrast of a liquid crystal display element is not limited to the light reflected by the black matrix. It is often the case that a black frame with a width of about 2 to 5 mm, serving as a light-blocking layer, is formed around the perimeter of the display area of a liquid crystal display element. Conventionally, the black frame was made of the same material used in the black matrix for the sake of convenience in manufacturing, and therefore, the back surface of the black frame also had a metallic luster. Thus, light leakage occurs around the black frame. By using a light absorbing material in the back surface of the black frame, it is possible to reduce the light leakage around the display area.

The liquid crystal used in the present invention is not limited to a liquid crystal having a mode of an OCB type. More specifically, the invention can be applied to any types of liquid crystals or display elements comprising a liquid crystal as long as they have such a mode that the display operation is performed by using birefringence. For example, an ASV (Advanced Super V) mode that is rubbed in a parallel direction may also be used.

In this Example, it has been explained by using a light-transmissive type display element, but a light-reflective type display element may also be applied. In the case of a light-reflective type display element, the reflected light in question passes through the liquid crystal layer four times.

In the present invention, since one of the problems to be solved relates to very small influence of the reflected light, the higher the contrast is, the more serious the problem becomes. The present invention is effective on a display element with a contrast ratio of 100 or higher, and has a distinctive effect on a display element with a contrast ratio of 200 or higher. Also, the present invention was effective on STN type display elements; however, the effect was not so great since such elements have basically low contrast.

### EXAMPLE 2

Example 2 of the present invention relates to anti-reflection measures employed on an array substrate.

In Example 1 of the present invention, in order to prevent reflection from the upper substrate, a light absorbing material was used in the back surface of the black matrix. However, since the ITO transparent electrode is formed on the upper substrate, which generates the difference in the refractive indices of the materials thereof, a slight reflection also occurs at the liquid crystal/ITO interface and at the ITO/substrate interface. The further description will be given in the following Examples. Thus, even if the resin BM is used in the black matrix on the upper substrate, the reflection of light off of the upper substrate toward the lower substrate cannot be eliminated completely. When the reflected light from the liquid crystal/ITO interface reflects off the lower substrate toward the upper substrate again, the reflected light will cause contrast reduction more or less due to the above-described reason.

Not only in the liquid crystal display element of the present Example, but also in a conventional liquid crystal display element, the lower substrate is an active matrix substrate on which a plurality of TFTs, metal wirings, and so forth are formed, occupying a fairly large area with respect to the display area, and therefore, for the reasons described above, the reflected light reflects off those components back toward the upper substrate. (For reference purpose, the area occupied by the wirings is larger than that occupied by the active elements.) Moreover, not only the reflected light but also the light coming from the upper substrate reflects off the components toward the upper substrate.

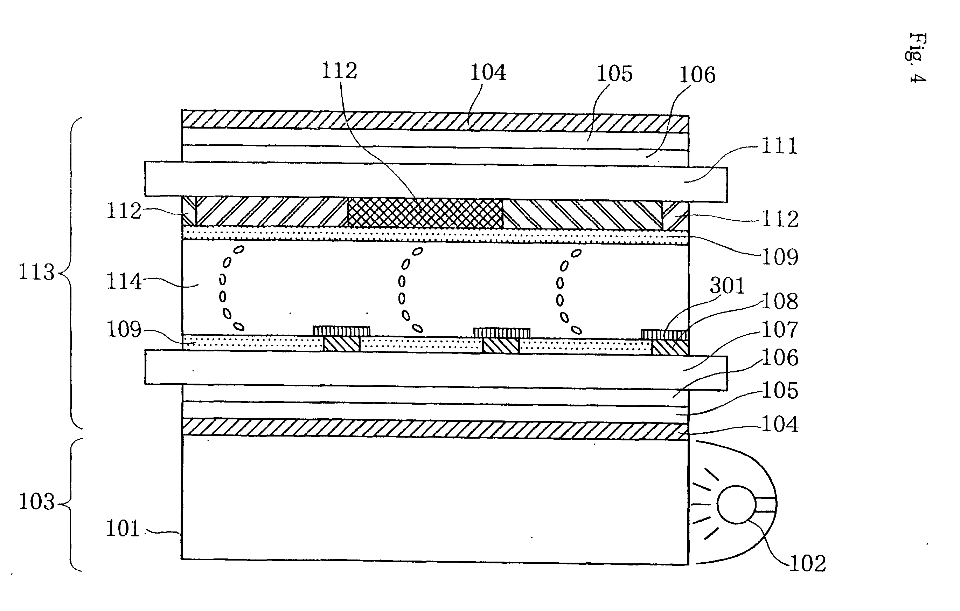

Accordingly, in Example 2, the resin layers in which a light absorbing pigment was dispersed, that is "resin BM 301" as referred in the present invention, were formed over the top surfaces of the TFTs/wirings 108 provided on the lower substrate 107, as shown in Fig 4. Thereby, the light reflection off of the lower substrate in an upward direction was reduced, and contrast was improved, resulting in a contrast ratio of 250.

In Example 2 too, the light absorbing material is not limited to the resin BM.

### EXAMPLE 3

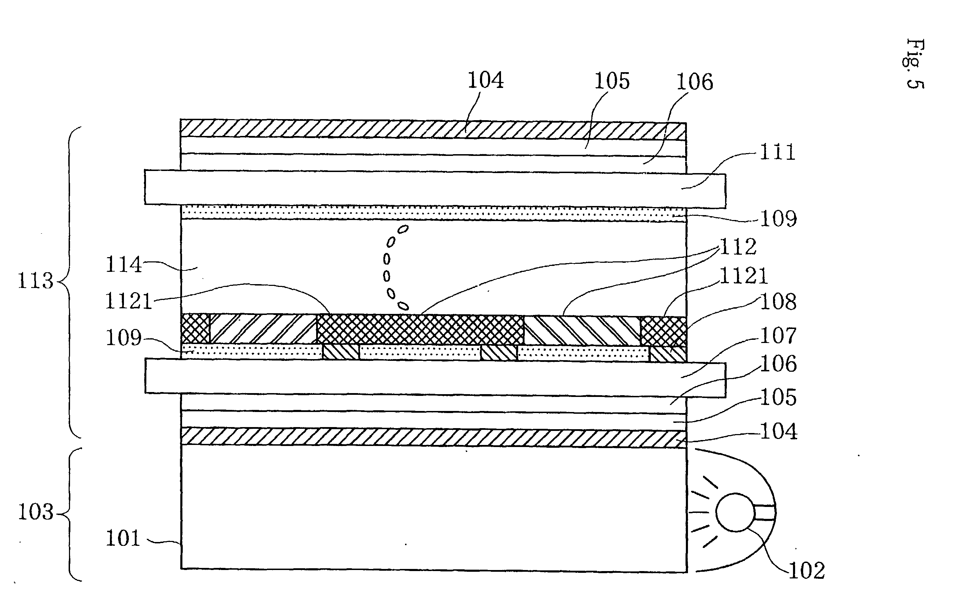

In Example 3 of the present invention, only the ITO transparent electrode is formed on the upper substrate, and the array comprising TFTs, electrodes, and wirings and color filters are formed on the lower substrate. Fig. 5 schematically illustrates a principal portion of the liquid crystal display element of Example 3 in accordance with the present invention. As shown in the central part of Fig. 5, a green (G) color filter 112, serving as the resin BM, is formed on the lower substrate 107 such that the green color filter is a little bit bigger than pixel size. Therefore, this color filter has an extended portion 1121 over the array and over metal wiring 108 provided on the lower substrate.

In Example 3, first, only the transparent electrode 109 is formed on the upper substrate 111, which means the number of the member contributing to reflection is small, and accordingly a higher contrast than the contrast achieved by Example 2 was achieved. More specifically, a contrast ratio of 300 was obtained.

Second, since the portions provided on the lower substrate are made of metal, reflection, especially from the wirings, causes a problem. In Example 3, although the whole reflected light was not absorbed, just by forming a green color filter over the metal wiring, a practically sufficient effect is exhibited. That is, the color filter is capable of absorbing the reflected light of complementary color that affects the sensitivity of human eyes.

Besides, in Example 3, it is not necessary to form the resin BM additionally, providing the cost-cut effect.

Also, as shown in Fig. 4, the resin BM capable of absorbing light completely may be formed over the top surfaces of the active elements and the wirings. It is also possible that color filters for other colors may be used for attaining part of the functions of the resin BM, depending on the pixel arrangement or the like.

In addition, by forming the resin BM capable of absorbing light completely, reflected light can be completely absorbed, although this requires additional manufacturing processes.

### EXAMPLE 4

In Example 4 of the present invention, the attention is focused on the incident angle of reflected light, and thus, a light focusing means is employed.

The previous Examples 1 to 3 discussed the reduction of the reflected light occurring at the back surface of the black matrix and at the array wirings. In a conventional liquid crystal display element, the black matrix provided on the opposing substrate and the array wirings provided on the array substrate are designed such that the black matrix and the array wirings are overlapped when viewed from the direction orthogonal to the substrate surface. Therefore, the light entering the back surface of the black matrix from the vertical direction and the light entering the array wirings from the vertical direction usually reflects off each other, and the light ends up attenuating. As a result, such light does not have much influence on the contrast reduction.

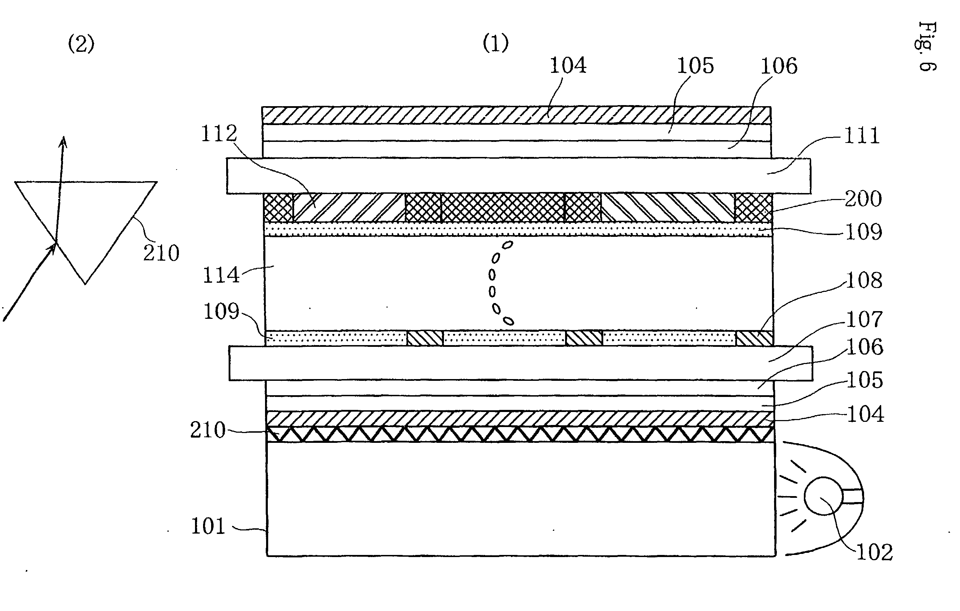

In other words, the light entering the surface of the substrate from an oblique direction is the light that reflects internally and thereby adversely affects contrast. Hence, as shown in Fig. 6(1), by disposing a light focusing means, such as a prism sheet 210, between a liquid crystal panel 113 and a light guide plate 101 in order to direct the light from the backlight toward the direction orthogonal to the surface of the substrate, that is in a front direction, and to attenuate oblique light itself, it is possible to reduce contrast reduction caused by such reflection. In Fig. 6(1), the reference numeral 210 shows the prism sheet, and the function thereof is illustrated in Fig. 6(2).

### EXAMPLE 5

Example 5 of the present invention is similar to the previous Example 4.

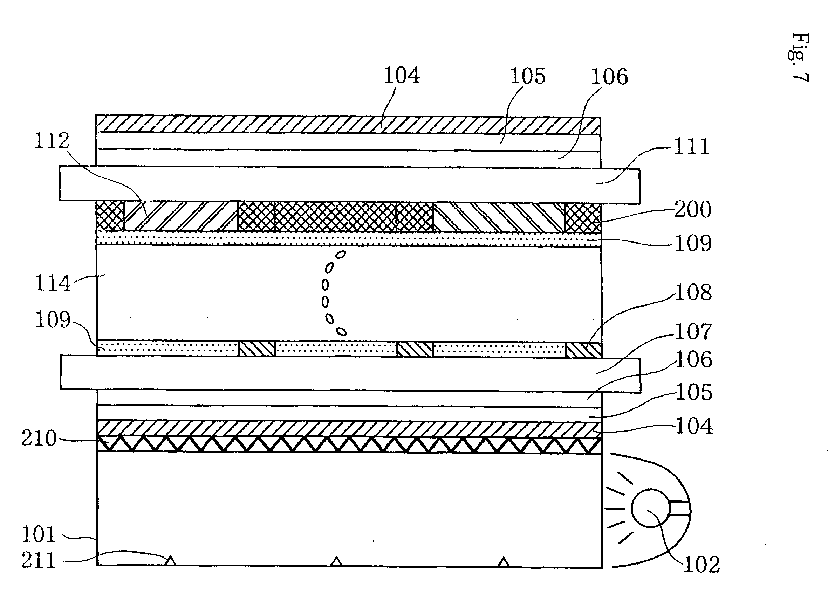

In order to reduce the light entering the surface of the substrate from an oblique direction, a focused-light reflecting means 211 for reflecting the light from the backlight in a front direction is provided on the back surface (the other side of the front side) of the light guide plate 101, as shown in Fig. 7.

The same effect as Example 4 was also provided by the present Example.

### EXAMPLE 6

Example 6 of the present invention describes the prevention of reflection that occurs between layers having different refractive indices.

In the previous Examples 1 to 3, by covering the metallic-lustered portions, facing the liquid crystal layer, with the resin BM, the reduction in contrast due to the reflected light from metal surfaces was prevented. However, as there has been a demand for a higher contrast in recent years, taking only such a measure is not enough to meet users' demands for a higher contrast. Accordingly, the present Example attempts to prevent reflection at interfaces having different refractive indices, particularly in such regions where light passes through.

The ITO used in a transparent electrode has a refractive index of about 1.9 to 2.0, while the substrates and the liquid crystal layer contacting the ITO transparent electrode each have a refractive index of about 1.5. Meanwhile, "amplitude reflectance" is generally defined as amplitude reflectance = {(n1-n2) / (n1+n2)} 2 (for example, Kozo Ishiguro, "Kougaku (Optics)," Shokabo), and when the values of n1 and n2 are about 1.5 to 1 and the difference in the values between n1 and n2 is big, reflectance becomes high. As a result, reflection of about 2% occurs at the ITO/liquid crystal interface and at the ITO/substrate interface. Due to this, as is the case with the previous Examples, reflected light passes through the liquid crystal layer three times, resulting in contrast reduction. Furthermore, in this case, a significant contribution to the contrast reduction is made since the areas occupied by the portions contacting between the ITO and the liquid crystal layer and between the ITO and the substrate (i.e., pixel area) are very large with respect to the display surface.

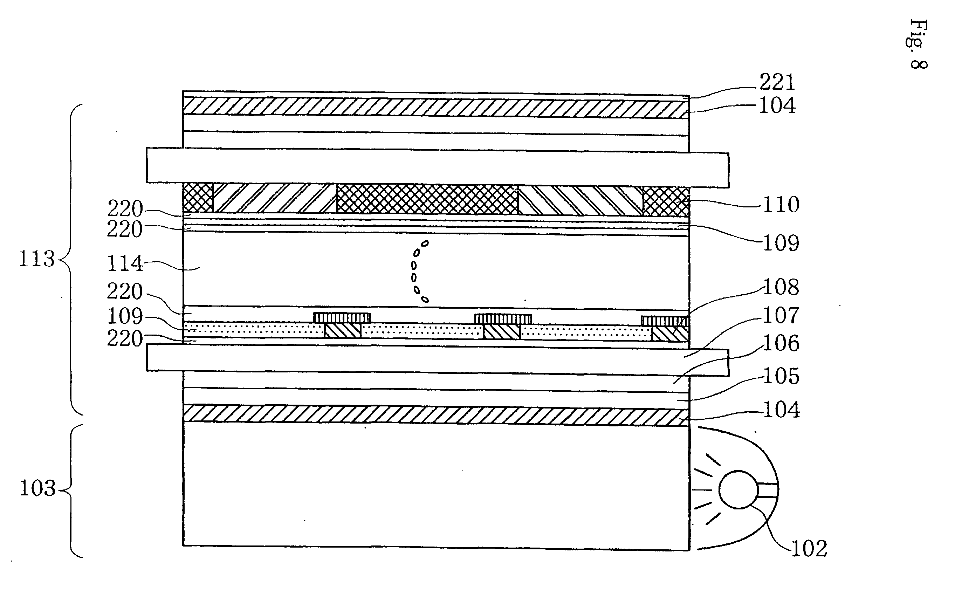

Fig. 8 schematically illustrates a principal portion of the liquid crystal display element of Example 6 in accordance with the present invention. In the liquid crystal display element, for the ITO layers 109 formed on both upper and lower substrates (107 and 111), anti-reflecting layers 220, which also serves as planarizing layers for reducing projections and depressions on the array substrate, are included on the ITO layer/liquid crystal interfaces, on the ITO layer/upper substrate interface, and on the ITO layer/lower substrate interface, by applying and curing acrylic resin layers having a refractive index of 1.7 that is an intermediate refractive index between that of the interfaces. Thereby, the reflectance of the ITO surfaces was decreased, which provided a further improvement in contrast, achieving a contrast ratio of 400.

The further description of the above will be given below. For example, in the case where incident light is 100%, when the intensity of reflected light is adjusted to 0.03% or lower at the time when the reflected light has gone out of the panel, a distinctive effect can be provided. When film reflection is reduced to a negligible level by completely eliminating the reflection off of both front and back surfaces of the BM and of the array wirings, only reflection off of the ITO would become obvious. Then, reflection of 2% occurs at both front and back surfaces of the ITO provided on each of the upper and lower substrates, hence the reflectance will turn out to be 0.16% (4%*4%). The retardation value of such reflected light is exceeded only 120 nm, and therefore, the transmissivity in a black state is 10%. In this case, the total intensity of the reflected light, when incident light is 100%, is 0.016%. Practically, reflection off of the TFTs and the wirings and of the back surface of the BM should also be added. Therefore, in conventional OCB panels, the intensity of reflected light reached as high as 0.05%.

However, by employing the present Example in combination with other previous Examples 1 to 5 in order to obtain the intensity of reflected light of 0.03% or lower, the contrast nearly equal to that of TN has been achieved. Moreover, it is also possible to obtain the intensity of reflected light of 0.02% or lower by using materials with excellent properties, and thereby even higher contrast has been achieved.

In the present Example, both front and back surfaces of the ITO transparent electrode were subjected to an anti-reflection treatment. However, needless to say, even when either the front surface or the back surface is subjected to such a treatment, a certain degree of effect can be provided.

An organic conductive film with a refractive index of about 1.7 may also be used instead of an acrylic resin. Thereby, the effect of decreasing electric resistance can be provided on the ITO film additionally.

### EXAMPLE 7

Example 7 of the present invention relates to measures to prevent interfacial reflection that occurs within the retardation films.

In the liquid crystal display element of Example 7 in accordance with the present invention, although the retardation film has a two-layered structure, light reflection even occurs at the interface between the layers. Particularly for a film wherein a discotic liquid crystal is hybrid aligned, since such film is formed on a base film having a refractive index of 1.5, the alignments of the liquid crystal molecules of the film and that of the base film differ from each other, causing a difference in the refractive indices between the top and bottom films.

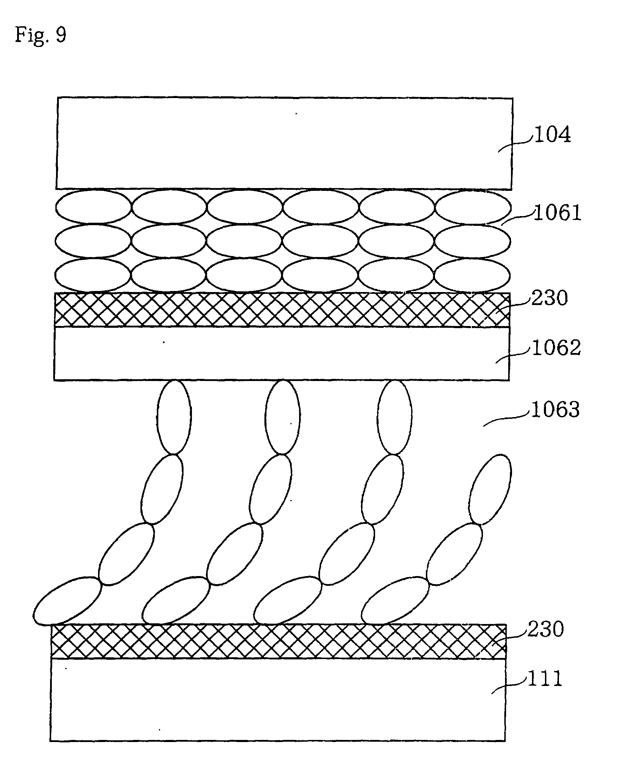

The present inventors have found that a surface of a parallel-aligned discotic liquid crystal had a refractive index of about 1.7 to 2.0, and there was a high rate of occurrence of light reflection at the interfaces between the surface and the base film, and between the surface and the glass. Hence, by providing a bonding layer having a refractive index of 1.6 between each of the interfaces, or by including an adhesive layer having a refractive index of 1.6 between each of the interfaces, so as to bond the two films together, interfacial reflection has been reduced, which is illustrated in Fig. 9.

In Fig. 9, the reference numeral 104 indicates a polarizing plate. The reference numeral 1061 indicates a film in which discotic liquid crystal having a refractive index of 1.7 is parallel aligned. The reference numeral 230 indicates an adhesive layer having a refractive index of 1.6. The reference numeral 1062 indicates a base film having a refractive index of 1.5. The reference numeral 1063 indicates a film in which discotic liquid crystal having a refractive index of 1.6 is hybrid aligned. The reference numeral 111 indicates an upper glass substrate.

In the present Example, surface reflectance is reduced down to 0.2%. This reflectance is sufficiently low to improve the contrast of OCB mode liquid crystal display elements since such elements require a reflectance of 1% or lower for contrast improvement.

### EXAMPLE 8

Example 8 of the present invention relates to liquid crystal display elements in which an interface between the air and the polarizing plate, which is the outermost portion of the liquid crystal display element, is subjected to an anti-reflection treatment. For the reasons stated above, since the refractive index of the air and that of the polarizing plate differ from each other, light reflects off the outer surface of the polarizing plate when the polarizing plate is not subjected to an anti-reflection treatment. Such a problem is less likely to occur in the case of the light coming from a vertical direction. However, in the case of the light coming from an oblique direction, reflection cannot be eliminated completely since the crossing angle in the polarizing plates for the light coming from oblique directions differs from that for the light coming from the front directions. Thus, internally reflected lights having different retardations are generated. Since such internally reflected light causes a bluish color shift, when the element in a black display state is viewed from oblique directions, the bluish color shift appears in the displayed image.

In view of this problem, in the liquid crystal display element of Example 8 in accordance with the present invention, a surface of a polarizing plate is subjected to an anti-reflection treatment, and thereby the internally reflected light resulting from the oblique light is reduced. Fig. 7 shows such an anti-reflection film 221. As a result of the reduction in the internally reflected light, a color shift that occurs in a black display state when viewed from an oblique direction was eliminated.

### EXAMPLE 9

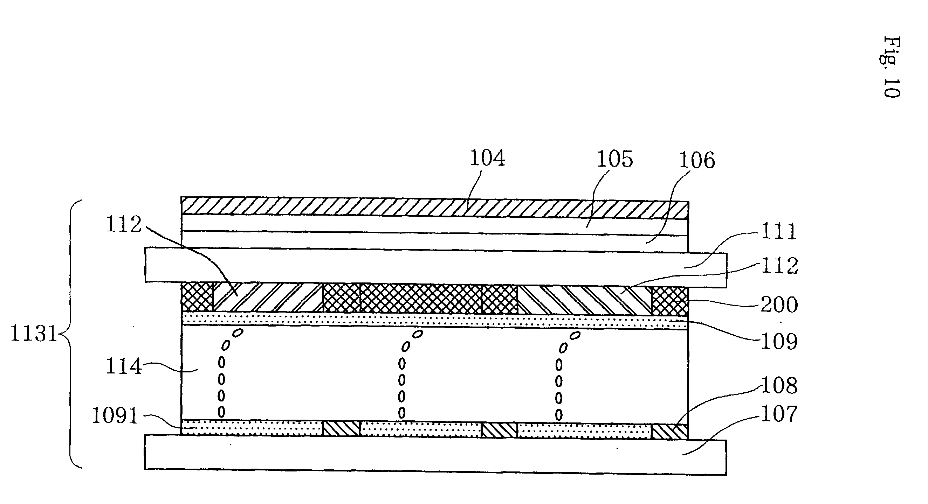

Example 9 of the present invention relates to light-reflective type liquid crystal display elements. Fig. 10 shows a cross sectional view of the liquid crystal display element of Example 9 in accordance with the present invention. In Fig. 10, the reference numeral 1091 shows a lower electrode film of the light-reflective type liquid crystal display element. The liquid crystal of the element is hybrid aligned wherein one side is parallel aligned and the other side is vertically aligned. This structure is generally called ROCB.

In Example 9, all the black matrices on the upper substrate are the resin BM 200 composed of a light absorbing material.

Needless to say, the upper substrate can be an array substrate.

Also, it is not necessary to use color filters.

### EXAMPLE 10

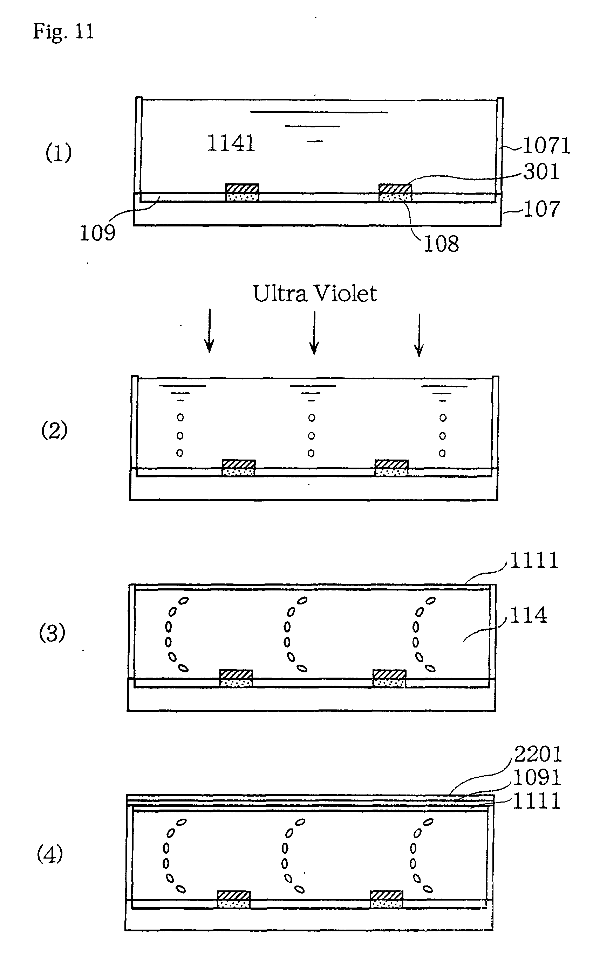

Although it may depend on the definition of the word "substrate," Example 10 of the present invention relates to the case where only one substrate is used. In view of the recent needs for the manufacturing rationalization and for the element weight reduction, an element constructed in the following manner has been developed. A substrate having TFTs and wirings thereon, which are formed in advance, is prepared, and a layer of a mixture containing a material for forming a liquid crystal and a material for forming a transparent resin film is formed thereover. By irradiating the substrate with ultraviolet or the like, a liquid crystal layer is formed in the lower portion and a transparent resin film, which functions as an upper substrate, is formed in the upper portion. This is shown in Figs. 11(1) to 11(3). In Fig. 11(1), the reference numeral 107 indicates a lower substrate, the reference numeral 109 indicates a lower transparent electrode for pixels formed on top of the lower substrate, and the reference numeral 108 indicates an array of active elements, wirings, and so forth. On top of the array, the reference numeral 301 indicates a light absorbing material film having a substantially lattice structure. The reference numeral 1071 indicates a sidewall portion. The reference numeral 1141 indicates a mixture containing a liquid crystal material and a transparent resin film material.

As shown in Fig. 11(2), the mixture containing the materials is separated by ultraviolet irradiation. Then, as shown in Fig. 11(3), a liquid crystal layer 114 is formed on a lower substrate side, and a transparent resin film 1111 is formed on top thereof.

Fig. 11(4) shows a state of the finished product, and the reference numeral 1091 indicates an upper transparent electrode made of an organic conductive resin. The reference numeral 2201 indicates an anti-reflection film and insulated film made of a transparent resin having a refractive index of about 1.3 that is an intermediate refractive index between that of the air and that of the organic conductive resin film.

In the present Example, it is also possible to form an anti-reflection film and insulated film on top of a separated transparent resin film having conductivity.

### EXAMPLE 11

The present example relates to liquid crystal logic elements.

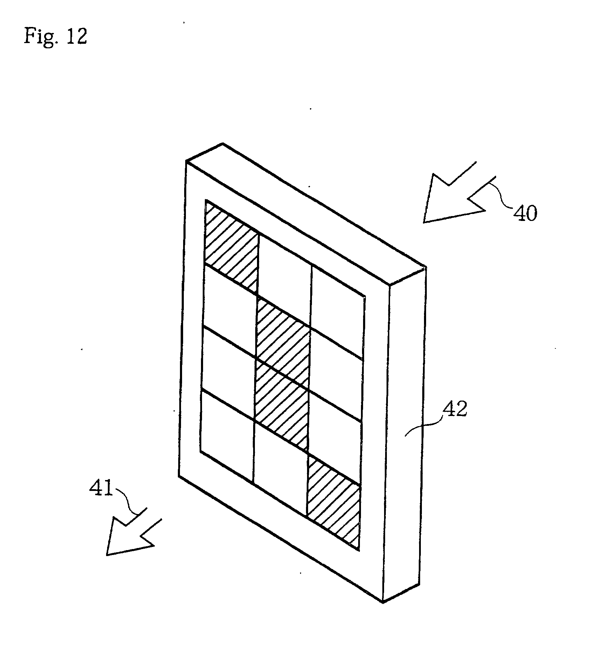

In recent years, optical logic elements as shown in Fig. 12 have been developed. The optical logic element 42 receives an incident light 40, and outputs the results of computation as a passing light 41. Such an element requires a high contrast ratio when applied to optical computers. In this case too, by employing combinations of the techniques described in the previous Examples 1 to 10 and thereby reducing the internal reflection that occurs inside the element wherein an OCB liquid crystal having a fast response property is included, a high contrast ratio is achieved.

Thus far, the present invention has been described based on several examples thereof. One of the objects of the present invention is to provide liquid crystal display elements with OCB or other types having an exceptional contrast ratio and so forth by reducing various types of interfacial reflections or the like. Therefore, combinations of any of Examples 1 to 11 may be employed so as to reduce reflected light.

In addition to the above, there are many other variations such as follows:
1) An organic conductive film may be used instead of or in combination with the ITO film.
2) In Example 3, the extended portions formed outside the perimeters of three color filters may be multi-layered to achieve not only a more effective black matrix but also a block against oblique light.
3) Pixels for each color may be arranged in a delta or stripe alignment.

### INDUSTRIAL APPLICABILITY

As has been described thus far, according to the present invention, it is possible to provide a liquid crystal display element with excellent display characteristics, such as high contrast, particularly when an OCB mode liquid crystal is used therein.

## Claims

1. A liquid crystal display element including a liquid crystal provided on a substrate, said liquid crystal being of a mode wherein the display operation is performed by controlling an amount of birefringence, comprising:
means for reducing reflection that occurs inside said liquid crystal display.

2. A liquid crystal display element including a liquid crystal provided on a substrate, said liquid crystal being of a mode wherein the display operation is performed by controlling an amount of birefringence, comprising:
a light-blocking portion wherein at least a part of said light-blocking portion facing a liquid crystal layer is composed of a light absorbing material, said light-blocking portion formed in at least a part of a non-light transmissive portion provided on said substrate or on at least one of two substrates.

3. A liquid crystal display element including a liquid crystal provided on a substrate, said liquid crystal being of a mode wherein the display operation is performed by controlling an amount of birefringence, comprising:
a light-blocking portion wherein at least a part of said light-blocking portion facing a liquid crystal layer is composed of a light absorbing material, said light-blocking portion formed in a black matrix provided on said substrate.

4. A liquid crystal display element including a liquid crystal provided on a substrate, said liquid crystal being of a mode wherein the display operation is performed by controlling an amount of birefringence, comprising:
a light absorbing portion formed over a portion of active elements and/or wirings provided on an active matrix substrate.

5. A liquid crystal display element including a liquid crystal sandwiched between two substrates, said liquid crystal being of a mode wherein the display operation is performed by controlling an amount of birefringence, comprising:
a light absorbing portion formed over at least a portion of each of said two substrates.

6. A liquid crystal display element including a liquid crystal provided on a substrate, said liquid crystal being of a mode wherein the display operation is performed by controlling an amount of birefringence according to claim 3, further comprising a light absorbing portion formed over at least a portion of active elements and/or wirings provided on an active matrix substrate.

7. A liquid crystal display element according to any one of claims 1 to 6, wherein said light-blocking portion is composed of a light absorbing material.

8. A liquid crystal display element according to claim 7, wherein said light absorbing material is a light-blocking portion, said light-blocking portion being composed of a resin in which a light absorbing material is dispersed.

9. A liquid crystal display element including a liquid crystal provided on a substrate, said liquid crystal being of a mode wherein the display operation is performed by controlling an amount of birefringence, comprising:
a light absorbing portion formed over at least a portion of active elements and/or wirings provided on an active matrix substrate, and
a color filter.

10. A liquid crystal display element including a liquid crystal provided on a substrate, said liquid crystal being of a mode wherein the display operation is performed by controlling an amount of birefringence, comprising:
at least one color filter formed over at least a portion of active elements and/or wirings provided on an active matrix substrate.

11. A liquid crystal display element according to claim 7, wherein at least one color filter is formed over at least a portion of active elements and/or wirings provided on an active matrix substrate.

12. A liquid crystal display element according to claim 8, wherein at least one color filter is formed over at least a portion of active elements and/or wirings provided on an active matrix substrate.

13. A liquid crystal display element including a liquid crystal provided on a substrate, said liquid crystal being of a mode wherein the display operation is performed by controlling an amount of birefringence, comprising:
an anti-reflection portion formed over a surface of at least one transparent electrode.

14. A liquid crystal display element including a liquid crystal provided on a substrate, said liquid crystal being of a mode wherein the display operation is performed by controlling an amount of birefringence, comprising:
at least one retardation film formed on said substrate or on at least one of two substrates, said retardation film having a surface treated by an anti-reflection treatment

15. A liquid crystal display element including a liquid crystal provided on a substrate, said liquid crystal being of a mode wherein the display operation is performed by controlling an amount of birefringence, comprising:
at least one retardation film formed on said substrate or on at least one of two substrates, said retardation film having a surface reflectance of 1% or less.

16. A liquid crystal display element according to any one of claims 1-6, 9, 10, or 13-15, wherein a retardation value of said retardation film in a front direction is not zero.

17. A liquid crystal display element according to any one of claims 1-6, 9, 10 or 13-15, wherein said retardation film has a multiple-layer structure, and at least one layer of said multiple-layer structure has an anti-reflection treated portion.

18. A liquid crystal display element according to any one of claims 1-6, 9, 10, or 13-15, wherein at least one interface with air of said liquid crystal display element has an anti-reflection treated portion.

19. A liquid crystal display element according to any one of claims 1-6, 9, 10, or 13-15, further comprising means for focusing light in a front direction.

20. A liquid crystal display element according to any one of claims 1-6, 9, 10, or 13-15, further comprising means for focusing light in a front direction provided on a light guide plate.

21. A liquid crystal display element according to any one of claims 1-6, 9, 10, or 13-15, wherein a retardation value of said liquid crystal during a black display state is not zero.

22. A liquid crystal display element according to any one of claims 1-6, 9, 10, or 13-15, wherein said liquid crystal is of an OCB type display mode.

23. A liquid crystal display element according to any one of claims 1-6, 9, 10, or 13-15, wherein a contrast ratio is 100 or higher.

24. A liquid crystal display element according to any one of claims 1-6, 9, 10, or 13-15, wherein an outgoing light having reflected inside said liquid crystal display element is of 0.03% or less with respect to a total incident light.

## Amended claims

### Amended claims in accordance with Rule 86(2) EPC.

1. (Amended) A liquid crystal display element including a substrate, a liquid crystal having a bend alignment, and a backlight source, comprising:
means for reducing light reflection inside said liquid crystal display element, said light being generated by said backlight source.

2. (Amended) A liquid crystal display element including a substrate, a liquid crystal having a bend alignment, and a backlight source, comprising:
a light-blocking portion provided on said substrate or on at least one of two substrates, a part of said light-blocking portion facing a liquid crystal layer being composed of a light absorbing material.

3. (Amended) A liquid crystal display element according to claim 2, wherein at least one of said substrates is an active matrix substrate, said liquid crystal display element further comprising a light-blocking portion formed over at least a portion of at least either one of active elements or wirings provided on said active matrix substrate, said light-blocking portion being composed of a light absorbing material.

4. (Amended) A liquid crystal display element according to claim 2, wherein at least one of said substrates is an active matrix substrate, and a color filter and said light-blocking portion are formed on said active matrix substrate.

5. (Amended) A liquid crystal display element according to any one of claims 2 to 4, wherein said liquid crystal display element has two substrates, and said light-blocking portion composed of a light absorbing material or said means for reducing light reflection is formed on at least a portion of each of said two substrates.

6. (Amended) A liquid crystal display element according to any one of claims 2 to 4, wherein said light-blocking portion is composed of a light absorbing resin.

7. (Amended) A liquid crystal display element according to any one of claims 2 to 4, wherein said light-blocking portion is composed of a resin in which a light absorbing material is dispersed.

8. (Amended) A liquid crystal display element according to any one of claims 2 to 4, wherein said light-blocking portion is composed of a light absorbing metal film.

9. (Amended) A liquid crystal display element according to any one of claims 2 to 4, wherein said light-blocking portion is composed of a color filter material, said light-blocking portion serving both as a color filter and a light-blocking portion.

10. (Amended) A liquid crystal display element according to claim 1, further comprising an anti-reflection transparent electrode formed on said substrate, said anti-reflection transparent electrode having a surface treated by an anti-reflection treatment.

11. (Amended) A liquid crystal display element according to claim 1, further comprising a retardation film having a layered structure, said retardation film wherein at least a part of an interface in said layered portion is subjected to an interfacial reflection reducing treatment.

12. (Amended) A liquid crystal display element according to claim 11, wherein said retardation film is a low-reflective retardation film having a surface reflectance of 1% or less.

13. (Amended) A liquid crystal display element according to any one of claims 1-4 or 10-12, further comprising an anti-reflection treated portion provided at at least one interface with air in a portion of said liquid crystal display element.

14. (Amended) A liquid crystal display element according to any one of claims 1-4 or 10-12, further comprising means for focusing light from said backlight source in a front direction.

15. (Amended) A liquid crystal display element according to any one of claims 1-4 or 10-12, further comprising, in a light guide plate, means for focusing light in a front direction.

16. (Amended) A liquid crystal display element including a substrate and a liquid crystal having a bend alignment, comprising:
means for preventing reflection of a light provided in a portion of said liquid crystal display element through which said light passes, said portion including a transparent electrode portion and an interface with air, and said light including a light passing though said portion and an external light.

17. (Amended) A liquid crystal display element according to claim 16, wherein said liquid crystal display element is a light-reflective type liquid crystal display element.

18. (Amended) A liquid crystal display element according to claims 16 or 17, further comprising an anti-reflection transparent electrode formed on said substrate, said anti-reflection transparent electrode having a surface treated by an anti-reflection treatment.

19. (Amended) A liquid crystal display element according to claims 16 or 17, further comprising a retardation film having a layered structure, said retardation film wherein at least a part of an interface in said layered portion is subjected to an interfacial reflection reducing treatment.

20. (Amended) A liquid crystal display element according to claim 19, wherein said retardation film is a low-reflective retardation film having a surface reflectance of 1% or less.

21. (Amended) A liquid crystal display element according to claims 16 or 17, further comprising an anti-reflection treated portion provided at at least one interface with air in a portion of said liquid crystal display element.

22. (Amended) A liquid crystal display element according to any one of claims 1-4, 10-13, 16, or 17, further comprising at least one retardation film wherein a retardation value of said retardation film in a front direction is not zero.

23. (Amended) A liquid crystal display element according to any one of claims 1-4, 10-13, 16, or 17, wherein, during a black display state, a retardation value of said liquid crystal is not zero.

24. (Amended) A liquid crystal display element according to any one of claims 1-4, 10-13, 16, or 17, wherein said liquid crystal display element has a contrast ratio of 100 or higher.

25. Added) A liquid crystal display element according to any one of claims 1-4, 10-13, 16, or 17, wherein an outgoing light having reflected inside is of 0.03% or less with respect to a total light intensity.

26. (Added) A liquid crystal optical logic element including a substrate, a liquid crystal having a bend alignment, and a light source, comprising:
means for reducing light reflection inside a liquid crystal display element, said light being generated by said light source.

27. (Added) A liquid crystal optical logic element including a substrate, a liquid crystal having a bend alignment, and a light source, wherein a light-blocking portion is formed on said substrate or on at least one of two substrates, a part of said light-blocking portion facing a liquid crystal layer being composed of a light absorbing material.
